# EUROPÄISCHE PATENTSCHRIFT

(11) **EP 3 782 752 B1**
(45) Veröffentlichungstag und Bekanntmachung des Hinweises auf die Patenterteilung: **23.04.2025**
(21) Anmeldenummer: 20188568.8
(22) Anmeldetag: 30.07.2020
(51) Int. Cl.: B24B 19/04, B23C 5/10

(54) **SCHAFTFRÄSER**
END MILL
FRAISE À QUEUE

(30) Priorität: 05.08.2019 DE 102019211724
(43) Veröffentlichungstag der Anmeldung: 24.02.2021
(73) Patentinhaber: Gühring KG, 72458 Albstadt (DE)
(72) Erfinder: Bischoff, Thomas, 88090 Immenstaad (DE)
(74) Vertreter: Winter, Brandl - Partnerschaft mbB

(56) Entgegenhaltungen:
- CN-A- 104 191 020
- CN-U- 203 390 279
- DE-A1- 102012 019 799
- GB-A- 2 405 365
- JP-A- H06 335 814
- JP-A- H07 299 634
- US-A1- 2013 294 852
- US-B2- 9 878 379

## Beschreibung

Die Erfindung betrifft einen Schaftfräser zur Fräsbearbeitung von Verbundwerkstoffen, z.B. Faserverbundkunststoffen (FVK) wie kohlenstoff- oder glasfaserverstärkten Kunststoffen (CFK/GFK).

Faserverbundkunststoffe sind aufgrund ihrer mehrphasigen Struktur relativ schwer zu bearbeiten. So ist bei der Fräsbearbeitung einer FVK-Platte häufig beispielsweise eine Delamination von Faserverbundschichten oder Faserüberstände an den beiden Plattenoberflächen zu beobachten. Eine wirtschaftliche Bearbeitung moderner Faserverbundkunststoffe erfordert daher insbesondere in der Serienfertigung eine angepasste Werkzeuggestaltung, mit denen sich eine Delamination oder Faserüberstände an einem bearbeiteten FVK-Bauteil zuverlässig vermeiden lässt. Zu den erwähnten Werkzeugen mit angepasster Werkzeuggestaltung zählen beispielsweise Schaftfräser, die als sogenannte Kompressionsfräser ausgeführt sind, bei denen durch eine spezielle Schneidteilgestaltung gegeneinander gerichtete Axialschnittkräfte erzeugt werden. An der Stelle des Zusammentreffens der durch diese Schnittkräfte herkömmlich entstehenden Fasern eines fräsbearbeiteten FVK-Werkstoffs werden diese Fasern komprimiert und schließlich abgetrennt. Dadurch wird einer Delamination oder Faserüberständen an den beiden Plattenoberflächen vorgebeugt.

So ist beispielsweise in der DE 102006022572 A1 ein Schaftfräser mit einem Schaft und einem axial an den Schaft anschließenden Schneidteil angegeben, der eine geradzahlige Anzahl von beispielsweise vier Schneidstegen hat, die in Umfangsrichten durch Nuten voneinander beabstandet sind und jeweils eine Vielzahl von mit einem Links- oder Rechtsdrall verlaufenden Umfangsschneiden aufweisen. Den oben erwähnten Problemen Rechnung tragend wird vorgeschlagen, dass sich die Drallrichtung der Umfangsschneiden von in Umfangsrichtung unmittelbar aufeinander folgenden Schneidstegen von links nach rechts bzw. rechts nach links umkehrt. Die bei der Fräsbearbeitung eines FVK-Werkstoffs an zwei in Umfangsrichtung unmittelbar aufeinander folgenden Schneidstegen auftretenden Zerspankräfte erzeugen daher gegeneinander gerichtete Axialkräfte, die zu einer Kompression der Faserverbundschichten des FVK-Werkstoffs führen. Wird eine FVK-Platte gefräst, kann also erreicht werden, dass an die beiden Plattenoberflächen angrenzende Faserverbundschichten oder aus dem FVK-Werkstoff überstehende Fasern zuverlässig abgetrennt werden.

Aus beispielsweise der WO 2017/134011 A1 oder der US 9,174,287 B2 kennt der Fachmann einen Schaftfräser, der einen an einen Schaft anschließenden Schneidteil mit in Bezug auf die Drehachse des Schaftfräsers links- und rechtsgedrallten Umfangsschneiden aufweist, die durch sich kreuzende links- und rechtsgedrallte Nuten in Segmente geteilt sind. Die links- und rechtsgedrallten Nuten erstrecken sich mit einem gleichbleibenden Nutquerschnitt über eine Schneidzone im Schneidteil bzw. von einem stirnseitigen Ende bis zu einem schaftseitigen Ende des Schneidteils.

Im Unterschied dazu zeigt und beschreibt die US 3,913,196 oder die US 2013/0294852 A1 einen rechtsschneidenden Schaftfräser mit einem Schaft und einem an den Schaft anschließenden Schneidteil, der sich von einem schaftseitigen Ende bis zu einem stirnseitigen Ende erstreckt und in einem vorderen Längenbereich, der sich von dem stirnseitigen Ende bis zu einer Übergangsstelle im Mittelbereich des Schneidteils erstreckt, eine Vielzahl von rechtsgedrallten (d.h. mit einem positiven Drallwinkel verlaufenden) ersten Umfangsschneiden, die jeweils an eine rechtsgedrallte erste Nut (Spannut) angrenzen, und in einem hinteren Längenbereich, der sich von der oben erwähnten Übergangsstelle im Mittelbereich des Schneidteils bis zum schaftseitigen Ende des Schneidteils erstreckt, eine Vielzahl von linksgedrallten (d.h. mit einem negativen Drallwinkel verlaufenden) zweiten Umfangsschneiden, die jeweils an eine linksgedrallte zweite Nut (Spannut) angrenzen. Durch die gegenläufige Drallrichtung der ersten und zweiten Umfangsschneiden in dem vorderen bzw. hinteren Längenbereich des Schneidteils resultieren aus den bei einer Fräsbearbeitung eines FVK-Werkstoffs auftretenden Zerspankräften gegeneinander gerichtete Axialkräfte, die eine Kompression des FVK-Werkstoffs bewirken. Aufgrund der Aufteilung der ersten und zweiten Umfangsschneiden auf den vorderen bzw. hinteren Längenbereich des Schneidteils ergibt sich in dem vorderen Längenbereich in der Summe ein ziehender Schnitt, durch den Faserverbundschichten oder Fasern in Richtung des schaftseitigen Ende des Schneidteils gezogen werden, und in dem hinteren Längenbereich ein schiebender oder drückender Schnitt, durch den Faserverbundschichten oder Fasern in Richtung des stirnseitigen Endes des Schneidteils hin geschoben oder gedrückt werden. Durch die gegeneinander gerichteten Axialkräfte können eine Delamination von Faserverbundschichten oder Faserüberstände an den beiden Plattenoberflächen einer fräsbearbeiteten FVK-Platte vermieden werden. Da die ersten und zweiten Umfangsschneiden in den vorderen bzw. hinteren Längenbereich des Schneidteils jeweils individuell eingeschliffen werden, gestaltet sich die Ausbildung des Schneidteils und damit des Schaftfräsers insgesamt jedoch als relativ schwierig und zeitaufwändig.

Die Druckschrift CN 104 191 020 A offenbart einen Schaftfräser gemäß dem Oberbegriff des Anspruchs 1.

Ausgehend von einem Schaftfräser, wie er aus der CN 104 191 020 A bekannt ist, liegt der Erfindung daher die Aufgabe zugrunde, einen als Kompressionsfräser ausgeführten Schaftfräser zu schaffen, mit dem sich bei einer Fräsbearbeitung eines Verbundwerkstoffs eine hohe Oberflächengüte erreichen lässt, und der einfacher zu fertigen ist.

Diese Aufgabe wird durch einen Schaftfräser mit den Merkmalen des Anspruchs 1 gelöst. Vorteilhafte oder bevorzugte Weiterbildungen sind Gegenstand abhängiger Ansprüche.

Ein erfindungsgemäßer Schaftfräser zur Fräsbearbeitung von Verbundwerkstoffen, z.B. Faserverbundkunststoffen (FVK), hat eine definierte Schneid- bzw. Drehrichtung, d.h. er ist entweder rechtsschneidend/rechtsdrehend oder linksschneidend/linksdrehend ausgelegt. Der sich entlang einer Längsmittel- oder Drehachse erstreckende Schaftfräser lässt sich in funktionaler Hinsicht in einen in ein Spannfutter einspannbaren Schaft und einen Schneidteil unterteilen. Der Schneidteil kann axial unmittelbar oder über einen nichtschneidenden Verbindungsteil mittelbar an den Schaft anschließen. Der Schneidteil erstreckt sich von einem schaftseitigen Ende bis zu einem stirnseitigen Ende und weist in einem an das stirnseitige Ende angrenzenden stirnseitigen/vorderen Längenbereich ausschließlich oder zumindest nahezu ausschließlich eine Vielzahl von mit einem positiven Drallwinkel verlaufenden ersten Umfangsschneiden, die jeweils an eine mit einem positiven Drallwinkel verlaufende erste Nut angrenzen, und in einem an das schaftseitige Ende angrenzenden schaftseitigen/hinteren Längenbereich ausschließlich oder zumindest nahezu ausschließlich eine Vielzahl von mit einem negativen Drallwinkel verlaufenden zweiten Umfangsschneiden auf, die jeweils an eine mit einem negativen Drallwinkel verlaufende zweite Nut angrenzen.

Das Vorzeichen des Drallwinkels (positiv oder negativ) bzw. der Drallrichtung (positiv oder negativ) der Umfangsschneiden und Nuten ist durch die Schneidrichtung/Drehrichtung des Schaftfräsers eindeutig bestimmt. Bei einem rechtsschneidenden/rechtsdrehenden Schaftfräser haben rechtsgewendelte/rechtsgängige/rechtsgedrallte Umfangsschneiden/Nuten einen positiven Drallwinkel und linksgewendelte/linksgängige/linksgedrallte Umfangsschneiden/Nuten einen negativen Drallwinkel. Umgekehrt haben bei einem linksschneidenden/linksdrehenden Schaftfräser linksgewendelte/linksgängige/linksgedrallte Umfangsschneiden/Nuten einen positiven Drallwinkel und rechtsgewendelte/rechtsgängige/rechtsgedrallte Umfangsschneiden/Nuten einen negativen Drallwinkel. Eine Umfangsschneide mit einem positiven Drallwinkel erzeugt eine axiale Schnittkraft in Richtung des schaftseitigen Endes des Schneidteils und führt einen ziehenden Schnitt aus, während eine Umfangsschneide mit einem negativen Drallwinkel eine Schnittkraft in Richtung des stirnseitigen Endes des Schneidteils erzeugt und einen drückenden Schnitt ausführt. Ein erfindungsgemäßer Schaftfräser ist daher als ein Kompressionsfräser einsetzbar.

Durch die erfindungsgemäße Gestaltung wird in dem vorderen Längenbereich des Schneidteils ein nahezu ausschließlich ziehender Schnitt und in dem hinteren Längenbereich des Schneidteils ein nahezu ausschließlich schiebender oder drückender Schnitt erreicht. Bei einer Fräsbearbeitung einer FVK-Platte werden daher gegeneinander gerichtete Axialkräfte erreicht, die eine Kompression des FVK-Werkstoffs bewirken und einer Delamination sowie Faserüberständen an den beiden Plattenoberflächen der FVK-Platte vorbeugen.

Jede Umfangsschneide bildet in der dem Fachmann bekannten Art und Weise im Querschnitt einen Schneidkeil, der durch einen Keilwinkel, Freiwinkel und Spanwinkel eindeutig definiert ist. In Erstreckungsrichtung gesehen erstreckt sich jede Umfangsschneide von einem stirnseitig liegenden Schneideneck zu einem schaftseitig liegenden Schneideneck und entspricht der Schnittlinie zwischen einer Freifläche und einer Spanfläche. Jede Umfangsschneide hat daher eine über ein bloßes Schneideneck hinausgehende Umfangsschneidenlänge. Jede an eine Umfangsschneide angrenzende Nut dient der Spanabfuhr.

Im Unterschied zu den oben diskutierten Schaftfräsern, wie sie aus der US 3,913,196 oder US 2013/0294852 A1 bekannt sind, sind bei dem erfindungsgemäßen Schaftfräser die Schneidstege nun so weitergebildet, dass jeder erste Schneidsteg wenigstens eine der ersten Umfangsschneide in Umfangsrichtung bzw. Drehrichtung des Schaftfräsers nachgelagerte dritte Umfangsschneide, die an eine dritte Nut angrenzt, die einen kleineren Nutquerschnitt hat als die erste Nut, und jeder zweite Schneidsteg wenigstens eine der zweiten Umfangsschneide in Umfangsrichtung bzw. Drehrichtung des Schaftfräsers nachgelagerte vierte Umfangsschneide aufweist, die an eine vierte Nut angrenzt, die einen kleineren Nutquerschnitt hat als die zweite Nut.

Jede dritte Nut, die zwei dritte Umfangsschneiden voneinander oder eine dritte Umfangsschneide von einer ggf. vorgelagerten ersten Umfangsschneide trennt, hat einen engeren oder kleineren, d.h. schmäleren und/oder weniger tiefen, Nutquerschnitt als eine vor der vorgelagerten ersten Umfangsschneide liegende erste Nut. Ebenso hat jede vierte Nut, die zwei zweite Umfangsschneiden voneinander oder eine vierte Umfangsschneide von einer ggf. vorgelagerten zweiten Umfangsschneide trennt, einen engeren oder kleineren, d.h. schmäleren und/oder weniger tiefen, Nutquerschnitt als eine vor der vorgelagerten ersten Umfangsschneide liegende zweite Nut. Die dritten und vierten Umfangsschneiden dienen zur Nachbearbeitung der durch die ersten bzw. zweiten Umfangsschneiden erzeugten Oberflächen. Die dritten und vierten Umfangsschneiden trennen Fasern ab, die ggf. durch den Eingriff der ersten bzw. zweiten Umfangsschneiden aus einem fräsbearbeiteten Verbundwerkstoff herausgerissen aber nicht abgetrennt wurden. Im Unterschied zu den ersten und zweiten Umfangsschneiden ergeben sich bei einer Fräsbearbeitung mit den dritten und vierten Umfangsschneiden geringere Spandicken, d.h. kleinere Späne, wodurch eine höhere Oberflächengüte erreicht wird. Die ersten und zweiten Umfangsschneiden können daher auch als erste bzw. zweite Vorbearbeitungs-, Grobbearbeitungs- oder Schruppschneiden und die dritten und vierten Umfangsschneiden als dritte bzw. vierte Nachbearbeitungs-, Feinbearbeitungs- oder Schlichtschneiden bezeichnet werden.

Im Ergebnis wird mit dem erfindungsgemäßen Schaftfräser neben der erwünschten Kompression der fräsbearbeiteten Verbundwerkstoffe, z.B. Faserverbundkunststoffe (FVK) wie kohlenstoff- oder glasfaserverstärkten Kunststoffe (CFK/GFK), eine hohe Oberflächengüte einer durch die Fräsbearbeitung entstehenden Oberfläche erreicht.

Eine zumindest teilweise Profilierung der Umfangsschneiden durch sogenannte Spanteilernuten, d.h. eine Unterteilung der Umfangsschneiden in Schneidensegmente, trägt des Weiteren zu einer guten Oberflächengüte und Spanabfuhr teil. Erfindungsgemäß weisen die ersten Schneidstege Spanteilernuten auf, die zumindest einen Teil der ersten Umfangsschneiden und dritten Umfangsschneiden in Schneidensegmente teilen, und weisen die zweiten Schneidstege Spanteilernuten auf, die zumindest einen Teil der zweiten Umfangsschneiden und vierten Umfangsschneiden in Schneidensegmente teilen. Jedes Schneidensegment einer Umfangsschneide erstreckt sich von einem stirnseitig liegenden Schneiden(segment)eck zu einem schaftseitig liegenden Schneiden(segment)eck und hat daher eine über ein bloßes Schneiden(segment)eck hinausgehende Umfangsschneidenlänge.

Die Spanteilernuten werden erfindungsgemäß dadurch erreicht, dass sich in Umfangsrichtung des Schaftfräsers betrachtet jede zweite erste Nut in den hinteren Längenbereich hinein bis an das schaftseitige Ende des Schneidteils heran erstreckt und die zweiten und vierten Umfangsschneiden in Schneidensegmente teilt, und sich in Umfangsrichtung des Schaftfräsers betrachtet jede zweite zweite Nut in den vorderen Längenbereich hinein bis an das stirnseitige Ende des Schneidteils heran erstreckt und die ersten und dritten Umfangsschneiden in Schneidensegmente teilt.

Aufgrund der Erstreckung der ersten Nuten in den hinteren Längenbereich hinein zumindest bis an das schaftseitige Ende des Schneidteils heran und der zweiten Nuten in den vorderen Längenbereich hinein zumindest bis an das stirnseitige Ende des Schneidteils heran und der damit verbundenen erfindungsgemäßen Teilung der Schneidstege und der Umfangsschneiden in Schneidensegmente lässt sich der Schneidteil einfach und wirtschaftlich herstellen. Eine derartige Gestaltung bietet den Vorteil, dass die die ersten und zweiten Umfangsschneiden begrenzenden ersten bzw. zweiten Nuten nacheinander mit Hilfe einer Schleifscheibe, die ein einem Querschnittsprofil der ersten und zweiten Nuten entsprechendes Schleifscheibenprofil hat und mit einem der jeweiligen Nut entsprechenden Drall und über die Länge der entsprechenden Nut in einem Zug über den Schneidteil geführt wird, in den Schneidteil eingeschliffen werden können. Durch diese Maßnahme erübrigen sich daher von der Ausbildung der ersten und zweiten Nuten getrennte Arbeitsgänge zum Einschleifen der Spanteilernuten.

Im Interesse einer möglichst einfachen und wirtschaftlichen Ausbildung des Schaftfräsers sind die dritten und vierten Umfangsschneiden jeweils so ausgebildet, dass jede dritte Umfangsschneide parallel zu einer jeweils vorgelagerten ersten Umfangsschneide und jede vierte Umfangsschneide parallel zu einer jeweils vorgelagerten zweiten Umfangsschneide verläuft. In diesem Fall kann zur Ausbildung der ersten und dritten Umfangsschneiden bzw. der zweiten und vierten Umfangsschneiden eine Schleifscheibe mit gleichbleibendem Anstellwinkel zur Drehachse und ggf. veränderter radialer Zustelltiefe über den Schneidteil geführt werden.

Des Weiteren ist die Zahl der dritten Umfangsschneiden vorzugsweise gleich der Zahl der vierten Umfangsschneiden. Diesbezüglich können insbesondere jeder ersten Umfangsschneide zwei dritte Umfangsschneiden und jeder zweiten Umfangsschneide zwei vierte Umfangsschneiden nachgelagert sein.

Die Ausbildung des Schaftfräsers kann des Weiteren dadurch vereinfacht werden, dass die Umfangsschneiden je Schneidsteg äquidistant verteilt sind, und/oder die ersten und zweiten Nuten gleich große Nutbreiten und/oder Nuttiefen aufweisen, und/oder die dritten und vierten Nuten gleich große Nutbreiten und/oder Nuttiefen aufweisen, und/oder alle Umfangsschneiden auf einem gleichen Durchmesser bzw. (Flugkreis-)Radius liegen, und/oder die ersten Schneidstege und zweiten Schneidstege jeweils äquidistant um die Drehachse des Schaftfräsers verteilt sind, und/oder die ersten Schneidstege und zweiten Schneidstege gleich große Drallwinkel aufweisen, und/oder die Zahl der ersten Schneidstege gleich der Zahl der zweiten Schneidstege ist, insbesondere durch eine geradzahlige Anzahl, insbesondere vier, erster Schneidstege und eine geradzahlige Anzahl, insbesondere vier, zweiter Schneidstege.

Bei einem erfindungsgemäßen Schaftfräser kann der Schneidteil so gestaltet sein, dass der vordere Längenbereich kürzer ist als der hintere Längenbereich. Insbesondere kann die Länge des vorderen Längenbereichs das 0,1- bis 3-fache, vorzugsweise das 0,1- bis 0,2-fache, der Länge des Schneidteils betragen.

Der Schneidteil eines erfindungsgemäßen Schaftfräsers kann zusätzlich stirnschneidend ausgeführt sein. Diesbezüglich können die mit einem positiven Drallwinkel verlaufenden ersten Nuten bis in die Stirnseite des Schneidteils hinein gezogen sein und Stirnschneiden bilden. Der Schneidteil kann daher eine der Zahl der ersten Umfangsschneiden entsprechende Zahl von Stirnschneiden aufweisen, und jede Stirnschneide kann über ein Schneideneck in eine zugeordnete erste Umfangsschneide übergehen. Die Stirnschneiden können jeweils vor einer zugeordneten Längsmittelebene, in der die Drehachse des Schaftfräsers liegt, angeordnet sein und bei axialer Betrachtung insbesondere parallel zu der zugeordneten Längsmittelebene, vorzugsweise von dem zugeordneten Schneideneck aus geradlinig in Richtung Drehachse des Schaftfräsers, verlaufen.

Jedes der oben diskutierten Merkmale und jede der oben diskutierten Maßnahmen trägt zu einer einfachen und wirtschaftlichen Herstellung eines erfindungsgemäßen Schaftfräsers bei. Diesbezüglich kann beispielsweise ein Schaftfräserrohling mit einem dem herzustellenden Schaftfräser entsprechenden Nenndurchmesser in mehreren Schleifschritten bearbeitet werden. Zur Ausbildung der ersten und zweiten Umfangsschneiden können zunächst die ersten Nuten und zweiten Nuten jeweils mit Hilfe einer ersten Schleifscheibe, die ein dem Nutquerschnitt der ersten Nuten und zweiten Nuten entsprechendes Schleifscheibenprofil hat und über die Länge der entsprechenden Nut in einem Zug über den Schneidteil geführt wird, mit einem Drall um eine Drehachse des Schaftfräsers sequentiell in den Schneidteil geschliffen werden. Anschließend können zur Ausbildung der dritten und vierten Umfangsschneiden die dritten Nuten und vierten Nuten jeweils mit Hilfe einer zweiten Schleifscheibe, die ein dem Nutquerschnitt der dritten Nut und vierten Nut entsprechendes Schleifscheibenprofil hat und über die Länge der entsprechenden Nut in einem Zug über den Schneidteil geführt wird, mit einem Drall um die Drehachse des Schaftfräsers sequentiell in den Schneidteil geschliffen werden.

Die oben diskutierten und weitere Merkmale werden im Folgenden anhand der beiliegenden Zeichnungen am Beispiel einer bevorzugten Ausführungsform eines erfindungsgemäßen Schaftfräsers näher erläutert.
Fig. 1 zeigt eine Seitenansicht der bevorzugten Ausführungsform eines erfindungsgemäßen Schaftfräsers.
Fig. 2 und Fig. 3 zeigen zwei um 90° gegeneinander verdrehte maßstabsvergrößerte Seitenansichten des Stirnbereichs des Schaftfräsers aus Fig. 1.
Fig. 4 zeigt eine perspektivische maßstabsvergrößerte Seitenansicht des Stirnbereichs des Schaftfräsers aus Fig. 1.
Fig. 5 stellt eine maßstabsvergrößerte Stirnansicht des Schaftfräsers aus Fig. 1 dar.
Fig. 6 zeigt eine Seitenansicht eines Schaftfräsers in einem Zustand (z.B. nach einem ersten Fertigungsschritt bzw. zur Verdeutlichung unter Weglassen zweiter und weiterer Nuten), in dem der Schneidteil lediglich mit einem positiven Drallwinkel verlaufende erste Nuten aufweist.
Fig. 7 zeigt analog zu Fig. 6 eine Seitenansicht eines Schaftfräsers in einem Zustand, in dem der Schneidteil lediglich mit einem negativen Drallwinkel verlaufende zweite Nuten aufweist.
Fig. 8 zeigt eine Seitenansicht eines Schaftfräsers in einem Zustand, in dem der Schneidteil sich kreuzende erste Nuten und zweite Nuten aufweist.
Fig. 9 zeigt eine Stirnansicht des Schaftfräsers aus Fig. 6.
Fig. 10 einen maßstabsvergrößerten Ausschnitt "A" aus Fig. 9.
Fig. 11 zeigt analog zu Fig. 6 und 7 eine Seitenansicht eines Schaftfräsers in einem Zustand, in dem der Schneidteil lediglich mit einem positiven Drallwinkel verlaufende dritte Nuten aufweist.
Fig. 12 zeigt analog zu Fig. 11 eine Seitenansicht eines Schaftfräsers in einem Zustand, in dem der Schneidteil lediglich mit einem negativen Drallwinkel verlaufende vierte Nuten aufweist.
Fig. 13 zeigt eine Stirnansicht des Schaftfräsers aus Fig. 11.
Fig. 14 einen maßstabsvergrößerten Ausschnitt "B" aus Fig. 13.
Fig. 15 zeigt ähnlich wie Fig. 1 die Seitenansicht des erfindungsgemäßen Schaftfräsers als das Ergebnis einer Überlagerung der in Fig. 8, Fig. 11 und Fig. 12 gezeigten Nutstrukturen.

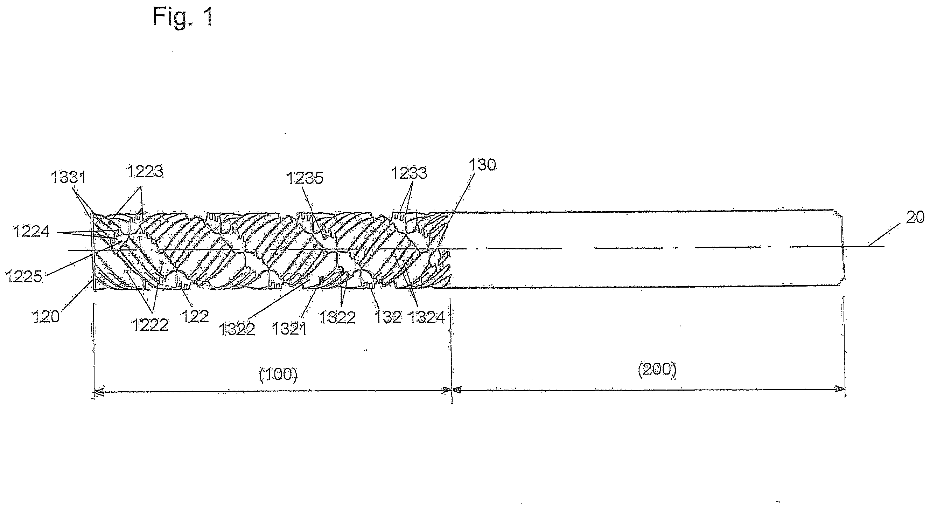

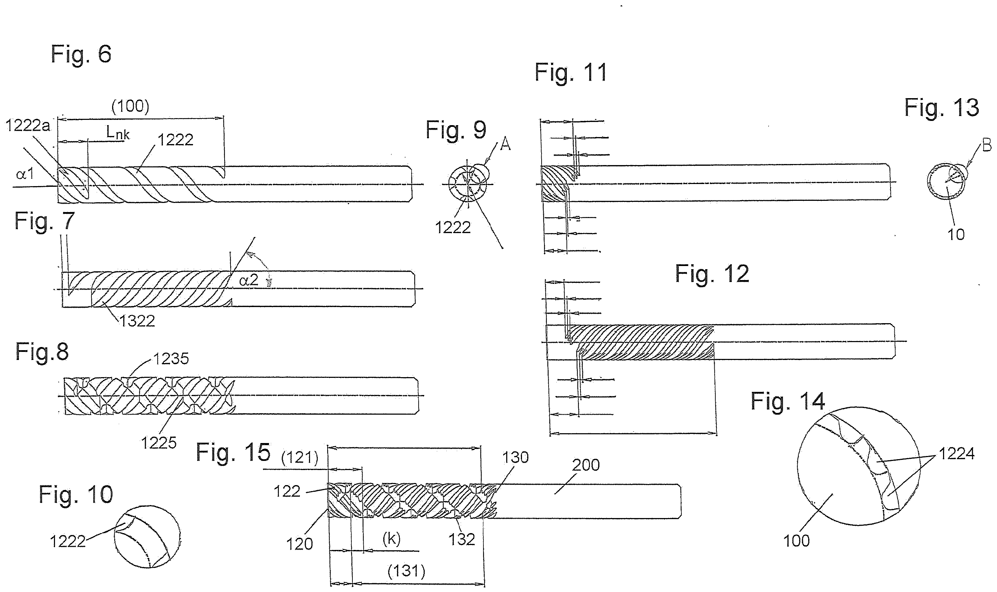

Die Figuren 1 bis 5 zeigen eine bevorzugte Ausführungsform eines erfindungsgemäßen Schaftfräsers zur Fräsbearbeitung von Verbundwerkstoffen, z.B. Faserverbundkunststoffen (FVK), in verschiedenen Ansichten. Die Figuren 6 bis 14 verdeutlichen einzelne Arbeitsschritte eines Verfahrens zur Herstellung des in Fig. 1 bis 5 gezeigten Schaftfräsers 10, die das Verständnis der verschiedenen Schneidstrukturen am Schneidteil 100 erleichtern sollen. Fig. 15 enthält verschiedene Längenangaben betreffend den Schneidteil 100.

In der in den Figuren gezeigten Ausführungsform ist der Schaftfräser 10 rechtsschneidend bzw. rechtsdrehend ausgeführt. Der sich entlang einer Längsmittel- oder Drehachse 20 erstreckende Schaftfräser 10 lässt sich in funktionaler Hinsicht in einen in ein Spannfutter einspannbaren Schaft 200 und einen Schneidteil 100 unterteilen (vgl. Fig. 1 und Fig. 15). In der gezeigten Ausführungsform schließt der Schneidteil 100 axial unmittelbar an den Schaft 200 an.

Der Schneidteil 100 erstreckt sich im Besonderen von einem schaftseitigen Ende130 bis zu einem stirnseitigen Ende 120 und weist in einem an das stirnseitige Ende 120 angrenzenden stirnseitigen/vorderen Längenbereich 121 vier rechtsgedrallte, d.h. mit einem positiven Drallwinkel α1 (vgl. Fig. 6) verlaufende, erste Schneidstege 122 und in einem an das schaftseitige Ende angrenzenden schaftseitigen/hinteren Längenbereich 131 vier linksgedrallte, d.h. mit einem negativen Drallwinkel α2 (vgl. Fig. 7) verlaufende, zweite Schneidstege 132 auf. Wie in Fig. 1 gezeigt und in Fig. 15 angegeben, überlappen sich die ersten und zweiten Schneidstege 122, 132 in einem Überlappungsbereich K. Bei einem erfindungsgemäßen Schaftfräser 10 kann der Schneidteil 100 so gestaltet sein, dass der vordere Längenbereich 121 kürzer ist als der hintere Längenbereich 131. Die Fig. 15 zeigt des Weiteren, dass der vordere Längenbereich 121 kürzer ist als der hinteren Längenbereich 131 des Schneidteils 100.

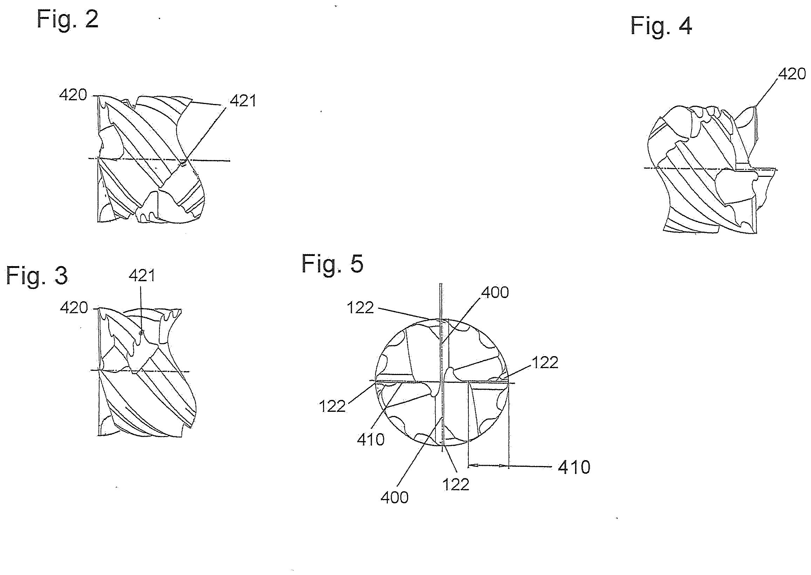

Die ersten und zweiten Schneidstege 122,132 sind jeweils äquidistant um die Drehachse 20 herum angeordnet und durch erste bzw. zweite spanabführende Nuten 1222, 1322 voneinander beabstandet. Die Stirnansicht in Fig. 5 zeigt die 90°-Teilung der ersten Schneidstege 122.

Jeder erste Schneidsteg 122 bildet eine in Drehrichtung vorauslaufende oder vorgelagerte erste Umfangsschneide 1221, die an eine erste Nut 1222 angrenzt, und zwei nachlaufende oder nachgelagerte dritte Umfangsschneiden 1223, die jeweils an eine dritte Nut 1224 angrenzen. Die dritten Umfangsschneiden 1223 und dritten Nuten 1224 verlaufen parallel zu den ersten Umfangsschneiden 1221 und ersten Nuten 1222, d.h. mit dem gleichen Drallwinkel α1 wie die ersten Umfangsschneiden 1221 und ersten Nuten 1222. Analog dazu bildet jeder zweite Schneidsteg 132 eine in Drehrichtung vorauslaufende oder vorgelagerte zweite Umfangsschneide 1321, die an eine zweite Nut 1322 angrenzt, und zwei nachlaufende oder nachgelagerte vierte Umfangsschneiden 1423, die jeweils an eine vierte Nut 1324 angrenzen. Die vierten Umfangsschneiden 1423 und vierten Nuten 1424 verlaufen parallel zu den zweiten Umfangsschneiden 1321 und zweiten Nuten 1322, d.h. mit dem gleichen Drallwinkel α2 wie die zweiten Umfangsschneiden 1321 und zweiten Nuten 1322. In Fig. 1 sind aus Gründen der Übersichtlichkeit die an einem der ersten Schneidstege 122 ausgebildeten Umfangsschneiden 1221 und die an einem der zweiten Schneidstege 132 ausgebildeten Umfangsschneiden 1321 mit Bezugszeichen gekennzeichnet. Im Besonderen erkennt man eine erste Umfangsschneide 1221 und zwei dritte Umfangsschneiden 1223, die an einem ersten Schneidsteg 122 ausgebildet sind, sowie eine zweite Umfangsschneide 1321 und zwei vierte Umfangsschneiden 1323, die an einem zweiten Schneidsteg 132 ausgebildet sind.

Jede der ersten, zweiten, dritten und vierten Umfangsschneiden 1221, 1321, 1323, 1423 bildet in der dem Fachmann bekannten Art und Weise im Querschnitt einen Schneidkeil, der durch einen Keilwinkel, Freiwinkel und Spanwinkel eindeutig definiert ist, wie es sich für den Fachmann beispielsweise auch aus den Figuren 10 und 14 ergibt. In Erstreckungsrichtung gesehen erstreckt sich jede Umfangsschneide, wie aus den Vergrößerungen in den Figuren 2 bis 4 am besten zu erkennen ist, von einem stirnseitig liegenden Schneideneck 420 zu einem schaftseitig liegenden Schneideneck 421 und entspricht der Schnittlinie zwischen einer Freifläche und einer Spanfläche. Jede Umfangsschneide hat daher eine über ein bloßes Schneideneck hinausgehende Umfangsschneidenlänge. Jede an eine Umfangsschneide angrenzende Nut dient daher der Spanabfuhr.

Jede dritte Nut 1332, die zwei dritte Umfangsschneiden 1223 voneinander oder eine dritte Umfangsschneide 1223 von einer ggf. vorgelagerten ersten Umfangsschneide 1221 trennt, hat einen engeren oder kleineren, d.h. in der gezeigten Ausführungsform schmäleren und weniger tiefen, Nutquerschnitt als eine vor der vorgelagerten ersten Umfangsschneide 1221 liegende erste Nut 1222, wie es sich aus einem Vergleich der Darstellungen der Fig. 9 und 13 ergibt. Analog dazu hat jede vierte Nut 1424, die zwei zweite Umfangsschneiden 1321 voneinander oder eine vierte Umfangsschneide 1323 von einer ggf. vorgelagerten zweiten Umfangsschneide 1321 trennt, einen engeren oder kleineren, d.h. schmäleren und weniger tiefen, Nutquerschnitt als eine vor der vorgelagerten ersten Umfangsschneide 1221 liegende zweite Nut. Die dritten und vierten Umfangsschneiden 1223, 1323 dienen zur Nachbearbeitung der durch die ersten bzw. zweiten Umfangsschneiden 1221, 1321 erzeugten Oberflächen. Wie eingangs erwähnt, trennen die dritten und vierten Umfangsschneiden 1223, 1323 Fasern ab, die ggf. durch den Eingriff der ersten bzw. zweiten Umfangsschneiden 1221,1321 aus einem fräsbearbeiteten Verbundwerkstoff herausgerissen, aber nicht abgetrennt wurden. Im Unterschied zu den ersten und zweiten Umfangsschneiden 1221, 1321 ergeben sich bei einer Fräsbearbeitung mit den dritten und vierten Umfangsschneiden 1223, 1323 geringere Spandicken, d.h. kleinere Späne, wodurch eine höhere Oberflächengüte erreicht wird. Die ersten und zweiten Umfangsschneiden 1221, 1321 können daher auch als erste bzw. zweite Vorbearbeitungs-, Grobbearbeitungs- oder Schruppschneiden und die dritten und vierten Umfangsschneiden 1223,1323 als dritte bzw. vierte Nachbearbeitungs-, Feinbearbeitungs- oder Schlichtschneiden bezeichnet werden.

In der gezeigten Ausführungsform sind des Weiteren je Schneidsteg die Umfangsschneiden äquidistant verteilt. Des Weiteren weisen die ersten und zweiten Nuten 1222, 1322 gleich große Nutbreiten und Nuttiefen auf, und weisen auch die dritten und vierten Nuten gleich große Nutbreiten und Nuttiefen auf. Darüber hinaus liegen alle Umfangsschneiden auf einem gleichen Durchmesser bzw. (Flugkreis-)Radius.

Durch die erfindungsgemäße Gestaltung wird in dem vorderen Längenbereich 121 des Schneidteils 100 ein nahezu ausschließlich ziehender Schnitt, durch den Faserverbundschichten oder Fasern eines fräsbearbeiteten Verbundwerkstoffs, in Richtung des schaftseitigen Endes 130 des Schneidteils 100 gezogen werden, und in dem hinteren Längenbereich 131 des Schneidteils 100 ein nahezu ausschließlich schiebender oder drückender Schnitt erreicht, durch den Faserverbundschichten oder Fasern eines fräsbearbeiteten Verbundwerkstoffs in Richtung des stirnseitigen Endes des Schneidteils 100 hin geschoben oder gedrückt werden. Bei einer Fräsbearbeitung einer FVK-Platte werden daher gegeneinander gerichtete Axialkräfte erreicht, die eine Kompression des FVK-Werkstoffs bewirken und einer Delamination sowie Faserüberständen an den beiden Plattenoberflächen der FVK-Platte vorbeugen.

Die Fig. 1 zeigt des Weiteren, dass die ersten und zweiten Schneidstege 122,132 und damit die an den Schneidstegen ausgebildeten ersten und dritten Umfangsschneiden 1221, 1223 bzw. zweiten und vierten Umfangsschneiden 1321, 1323 durch sogenannte Spanteilernuten 1225, 1235 zumindest teilweise in Schneidensegmente geteilt oder profiliert sind. Jedes Schneidensegment einer Umfangsschneide erstreckt sich von einem stirnseitig liegenden Schneiden(segment)eck 420 zu einem schaftseitig liegenden Schneiden(segment)eck und hat daher eine über ein bloßes Schneiden(segment)eck hinausgehende Umfangsschneidenlänge.

In der gezeigten Ausführungsform werden die Spanteilernuten 1225, 1235 dadurch erreicht, dass sich in Umfangsrichtung des Schaftfräsers 10 betrachtet jede zweite erste Nut in den hinteren Längenbereich 131 hinein bis an das schaftseitige Ende 130 des Schneidteils 100 heran erstreckt und die zweiten und vierten Umfangsschneiden 1321, 1423 in Schneidensegmente teilt, und sich in Umfangsrichtung des Schaftfräsers 10 betrachtet jede zweite zweite Nut in den vorderen Längenbereich 121 hinein bis an das stirnseitige Ende 120 des Schneidteils 100 heran erstreckt und die ersten und dritten Umfangsschneiden 1221, 1223 in Schneidensegmente teilt.

In der gezeigten Ausführungsform ist der Schneidteil 100 zusätzlich stirnschneidend ausgeführt. Die mit einem positiven Drallwinkel α1 verlaufenden ersten Nuten 1222 sind hierzu in die Stirnseite des Schneidteils 100 hineingezogen und bilden vier Stirnschneiden, die jeweils über ein Schneideneck in eine zugeordnete erste Umfangsschneide übergehen. Die geradlinig verlaufenden Stirnschneiden liegen jeweils parallel zu und vor einer zugeordneten Längsmittelebene und umfassen zwei über die Mitte schneiden lange Stirnschneiden 400 und zwei vor Mitte endende kurze Stirnschneiden 410, wie es in Fig. 5 gezeigt ist.

Anhand der Figuren 6 bis 15 wird im Folgenden ein Verfahren zur Herstellung des vorstehend beschriebenen Schaftfräsers 10 erläutert.

Zur Ausbildung der ersten und zweiten Umfangsschneiden 1221, 1321 werden, wie aus Fig. 6 und Fig. 7 erkennbar, zunächst die ersten Nuten 1222 und zweiten Nuten 1322 jeweils mit Hilfe einer (nicht gezeigten) ersten Schleifscheibe, die ein dem Nutquerschnitt der ersten Nuten 1222 und zweiten Nuten 1322 entsprechendes Schleifscheibenprofil hat und über die Länge der entsprechenden Nut in einem Zug über den Schneidteil geführt wird, mit einem Drall um eine Drehachse des Schaftfräsers 10 sequentiell in den Schneidteil 100 geschliffen werden.

Wie in Fig. 6 erkennbar ist, wird neben der mehrfach um den Schaftfräser 10 umlaufenden ersten Nut 1222 eine im vorderen Längenbereich des Schneidteils 121 vom stirnseitigen Ende des Schneidteils ausgehende kurze erste Nut 1222a eingeschliffen. Diese ist in dieser Ausführungsform in Drehrichtung des Schaftfräsers um 90° gegen die erste Nut 1222 versetzt. Eine Länge lₙₖ dieser kurzen ersten Nut 1222a entlang der Drehachse 20 vom stirnseitigen Ende 121 des Schneidteils 100 bis zum Nutauslauf entspricht beispielsweise ungefähr dem Durchmesser des Schaftfräsers 10.

Fig. 7 verdeutlicht den Schliff der zweiten Nuten 1322. Analog zu den ersten Nuten werden zwei um 90° zueinander versetzte zweite Nuten 1322 ausgehend vom schaftseitigen Ende 130 des Schneidteils 100 eingeschliffen, wobei eine dieser zweiten Nuten fast bis zum stirnseitigen Ende des Schneidteils durchläuft (wie aus Fig. 7 ersichtlich, ungefähr mit einem Abstand von einem Viertel bis einem Fünftel des Durchmessers des Schaftfräsers 10 vom stirnseitigen Ende 120 des Schneidteils 100), während die andere ungefähr im selben Bereich ausläuft, in dem die vorstehend erwähnte kurze erste Nut 1222a ausläuft, diese jedoch knapp überlappt. Die Nuten bilden in der Nähe des Überlappungsbereichs der kurzen ersten Nut 1222a mit der in der Nähe des Endes der Nut 1222a auslaufenden zweiten Nut den Kompressionsbereich. Durch die Nuten, die einander nur im Kompressionsbereich überlappen, steigt in diesem Bereich die Anzahl der Schneidflächen, was zu einer sichereren Abtrennung der Späne bzw. Fasern und dadurch zu einer saubereren Oberfläche des Werkstücks führt.

Insgesamt ergibt sich dadurch ein in Fig. 8 gezeigter Rohling. Wie aus Fig. 8 ersichtlich, kreuzen die jeweiligen ersten und zweiten Nuten einander, was dazu führt, dass die ersten Nuten als Spanteilernuten 1235 für die zweiten Nuten und umgekehrt die zweiten Nuten als Spanteilernuten 1225 für die ersten Nuten wirken.

In den Figuren 9 und 10 werden zur Verdeutlichung nochmals eine Vorderansicht des Rohlings aus Fig. 8 und ein vergrößerter Ausschnitt daraus gezeigt. Fig. 9 verdeutlicht die vorstehend erwähnte 90°-Anordnung der ersten Nuten (aus Fig. 6) zueinander, während in Fig. 10 die Formen eines der vier herausstehenden, durch die nachstehend erläuterten Arbeitsschritte weiterbearbeiteten Stege zwischen zwei Nuten vergrößert dargestellt ist.

Zur Ausbildung der dritten und vierten Umfangsschneiden 1223, 1423 werden anschließend die dritten Nuten 1224 und vierten Nuten 1324 jeweils mit Hilfe einer zweiten Schleifscheibe, die ein dem Nutquerschnitt der dritten Nut 1223 und vierten Nut 1423 entsprechendes Schleifscheibenprofil hat und über die Länge der entsprechenden Nut in einem Zug über den Schneidteil 100 geführt wird, mit einem Drall um die Drehachse des Schaftfräsers 10 sequentiell in den Schneidteil 100 geschliffen.

Analog zu den Figuren 6 und 7, die schematisch das Einschleifen der ersten und zweiten Nuten demonstrieren, wird anhand der Figuren 11 bis 15 schematisch die Fertigung der dritten und vierten Nuten 1224, 1324 genauer erläutert. Zur Vereinfachung der Zeichnung wurden in diesen Figuren die ersten und zweiten Nuten weggelassen. Wie aus Fig. 11 ersichtlich, werden in diesem Ausführungsbeispiel je drei dritte Nuten 1224 mit einem vorgegebenen Drallwinkel (im vorliegenden Beispiel dem Drallwinkel α1 der ersten Nuten 1222) und einem geringen Versatz zueinander, der ungefähr im Bereich einer Nutbreite liegt, in das Schneidteil (genauer auf die Stege des Schneidteils) eingeschliffen. Dieser Versatz ergibt sich beispielsweise durch das gleichzeitige Schleifen der Nuten mit einem entsprechend angepassten Schleifwerkzeug mit drei Vorsprüngen, mit dem ein Schaftfräserrohling geschliffen wird. Alternativ könnte auch eine Schleifscheibe dreimal über die entsprechende Fläche des Schaftfräsers geführt werden. Wie aus Fig. 11 ersichtlich werden die dritten Nuten 1224 parallel zu den ersten Nuten 1221 und nur ähnlich weit wie die erste kurze Nut 1222a eingeschliffen. Analog werden, wie in Fig. 12 verdeutlicht, je drei vierte Nuten 1324 parallel zur zweiten Nut auf die Stege des Schneidteils 100 eingeschliffen und enden auf ungefähr derselben Höhe wie die zweiten Nuten 1322. Auch hier ist ein Versatz wie vorstehend erläutert erkennbar, der beispielsweise von der Anstellung der Schleifscheibe herrührt. Ähnlich wie bei den ersten und zweiten eingeschliffenen Nuten bilden auch die dritten und vierten eingeschliffenen Nuten einen Überlappungsbereich, der im Einsatz eine Kompression des bearbeiteten Werkstoffs erzeugt.

Fig. 13 zeigt die Vorderansicht des mit derartigen Nuten gefertigten Schaftfräsers 10 gemäß Fig. 11 in einer Sicht auf das stirnseitige Ende des Schneidteils. Wie vorstehend erwähnt sind die im fertigen Teil eingefrästen ersten und zweiten Nuten hier aus Gründen der Übersichtlichkeit weggelassen. Fig. 14 verdeutlicht als vergrößerter Ausschnitt aus Fig. 13 die Formen der dritten Nuten 1224 und der daraus resultierenden Schneid- und Freiflächen.

Anschließend werden die Stirnschneiden 400, 410 in den Stirnbereich des Schaftfräsers 10 geschliffen.

Aufgrund der Erstreckung jeder zweiten der ersten Nuten in den hinteren Längenbereich 131 hinein und jeder zweiten der zweiten Nuten in den vorderen Längenbereich 121 hinein zumindest bis an das stirnseitige Ende des Schneidteils 120 heran und der damit verbundenen erfindungsgemäßen Teilung der Schneidstege 122,132 und der Umfangsschneiden in Schneidensegmente lässt sich der Schneidteil 120 einfach und wirtschaftlich herstellen. Eine derartige Gestaltung bietet den Vorteil, dass die die ersten und zweiten Umfangsschneiden 1221,1321 begrenzenden ersten bzw. zweiten Nuten 1222, 1322 nacheinander mit Hilfe einer Schleifscheibe, die ein einem Querschnittsprofil der ersten und zweiten Nuten 1222, 1322 entsprechendes Schleifscheibenprofil hat und mit einem der jeweiligen Nut entsprechenden Drall und über die Länge der entsprechenden Nut in einem Zug über den Schneidteil 120 geführt wird, in den Schneidteil 120 eingeschliffen werden können. Durch diese Maßnahme erübrigen sich daher von der Ausbildung der ersten und zweiten Nuten1222, 1322 getrennte Arbeitsgänge zum Einschleifen der Spanteilernuten.

Die vorstehend diskutierten Merkmale und jede der oben diskutierten Maßnahmen trägt zu einer einfachen und wirtschaftlichen Herstellung eines erfindungsgemäßen Schaftfräsers 10 bei. Diesbezüglich kann beispielsweise ein Schaftfräserrohling mit einem dem herzustellenden Schaftfräser entsprechenden Nenndurchmesser in mehreren Schleifschritten bearbeitet werden. Zur Ausbildung der ersten und zweiten Umfangsschneiden1221, 1321 können zunächst die ersten Nuten 1222 und zweiten Nuten 1322 jeweils mit Hilfe einer ersten Schleifscheibe, die ein dem Nutquerschnitt der ersten Nuten 1222 und zweiten Nuten 1322 entsprechendes Schleifscheibenprofil hat und über die Länge der entsprechenden Nut in einem Zug über den Schneidteil 100 geführt wird, mit einem Drall um eine Drehachse 20 des Schaftfräsers 10 sequentiell in den Schneidteil 100 geschliffen werden. Anschließend können zur Ausbildung der dritten und vierten Umfangsschneiden 1223, 1323 die dritten Nuten 1224 und vierten Nuten 1324 jeweils mit Hilfe einer zweiten Schleifscheibe, die ein dem Nutquerschnitt der dritten Nut 1224 und vierten Nut 1324 entsprechendes Schleifscheibenprofil hat und über die Länge der entsprechenden Nut in einem Zug über den Schneidteil 100 geführt wird, mit einem Drall um die Drehachse 20 des Schaftfräsers sequentiell in den Schneidteil geschliffen werden.

### Bezugszeichenliste

- 10: Schaftfräser
- 20: Drehachse
- 200: Schaft
- 100: Schneidteil
- 130: schaftseitiges Ende des Schneidteils
- 120: stirnseitiges Ende des Schneidteils
- 121: vorderer Längenbereich des Schneidteils
- 131: hinterer Längenbereich des Schneidteils
- 122: erste Schneidstege
- 132: zweite Schneidstege
- 1221: erste Umfangsschneiden
- 1222: erste Nuten
- 1222a: kurze erste Nut
- 1321: zweite Umfangsschneiden
- 1322: zweite Nuten
- 1223: dritte Umfangsschneiden
- 1224: dritte Nuten
- 1323: vierte Umfangsschneiden
- 1324: vierte Nuten
- 1225, 1235: Spanteilernuten
- 400: lange Stirnschneiden
- 410: kurze Stirnschneide
- 420: stirnseitiges Schneideneck
- 421: schaftseitiges Schneideneck
- α1, α2: Drallwinkel (der ersten und zweiten Schneidstege und Nuten)
- K: Kompressionsbereich
- lₙₖ: Länge der kurzen ersten Nut 1222a

## Patentansprüche

1. Schaftfräser (10) zur Fräsbearbeitung von Verbundwerkstoffen, mit einer definierten Drehrichtung, einem Schaft (200) und einem Schneidteil (100), wobei der Schneidteil (100) sich von einem schaftseitigen Ende (130) bis zu einem stirnseitigen Ende (120) erstreckt und in einem an das stirnseitige Ende (120) des Schneidteils (100) angrenzenden vorderen Längenbereich (121) eine Vielzahl von mit einem positiven Drallwinkel verlaufende erste Schneidstege (122) mit ersten Umfangsschneiden (1221), die jeweils an eine mit einem positiven Drallwinkel (α1) verlaufende erste Nut (1222) angrenzen, und in einem an das schaftseitige Ende (130) des Schneidteils (100) angrenzenden hinteren Längenbereich (131) eine Vielzahl von mit einem negativen Drallwinkel (α2) verlaufende zweite Schneidstege (132) mit zweiten Umfangsschneiden (1321), die jeweils an eine mit einem negativen Drallwinkel (α2) verlaufende zweite Nut (1322) angrenzen, aufweist, -wobei
jeder erste Schneidsteg (122) wenigstens eine der ersten Umfangsschneide (1221) nachgelagerte dritte Umfangsschneide (1223), die an eine dritte Nut (1224) angrenzt, die einen kleineren Nutquerschnitt hat als die erste Nut (1222), und jeder zweite Schneidsteg (132) wenigstens eine der zweiten Umfangsschneide (1321) nachgelagerte vierte Umfangsschneide (1323) aufweist, die an eine vierte Nut (1324) angrenzt, die einen kleineren Nutquerschnitt hat als die zweite Nut (1322), **dadurch gekennzeichnet, dass**
die ersten Schneidstege (122) Spanteilernuten aufweisen, die zumindest einen Teil der ersten Umfangsschneiden (1221) und dritten Umfangsschneiden (1223) in Schneidensegmente teilen, und die zweiten Schneidstege (132) Spanteilernuten aufweisen, die zumindest einen Teil der zweiten Umfangsschneiden (1321) und vierten Umfangsschneiden (1323) in Schneidensegmente teilen, wobei
sich in Umfangsrichtung des Schaftfräsers (10) betrachtet jede zweite erste Nut (1222) in den hinteren Längenbereich (131) hinein bis an das schaftseitige Ende (130) des Schneidteils (100) heran erstreckt und die zweiten und vierten Umfangsschneiden (1321, 1323) in Schneidensegmente teilt, und
sich in Umfangsrichtung des Schaftfräsers (10) betrachtet jede zweite zweite Nut in den vorderen Längenbereich (121) hinein bis an das stirnseitige Ende (120) des Schneidteils (100) heran erstreckt und die ersten und dritten Umfangsschneiden (1221, 1223) in Schneidensegmente teilt.

2. Schaftfräser (10) nach Anspruch 1, **dadurch gekennzeichnet, dass** jede dritte Umfangsschneide (1223) parallel zu der vorgelagerten ersten Umfangsschneide (1221) und jede vierte Umfangsschneide (1323) parallel zu der vorgelagerten zweiten Umfangsschneide (1321) verläuft.

3. Schaftfräser (10) nach Anspruch 1 oder 2, **dadurch gekennzeichnet, dass** die Zahl der dritten Umfangsschneiden (1223) gleich der Zahl der vierten Umfangsschneiden (1323) ist.

4. Schaftfräser (10) nach Anspruch 3, **dadurch gekennzeichnet, dass** jeder ersten Umfangsschneide (1221) zwei dritte Umfangsschneiden (1223) und jeder zweiten Umfangsschneide (1321) zwei vierte Umfangsschneiden (1323) nachgelagert sind.

5. Schaftfräser (10) nach einem der vorhergehenden Ansprüche, **dadurch gekennzeichnet, dass** alle Umfangsschneiden auf einem gleichen Radius liegen.

6. Schaftfräser (10) nach einem der vorhergehenden Ansprüche, **dadurch gekennzeichnet, dass** die ersten Schneidstege (122) und zweiten Schneidstege (132) jeweils äquidistant verteilt sind.

7. Schaftfräser (10) nach einem der vorhergehenden Ansprüche, **dadurch gekennzeichnet, dass** die ersten Schneidstege (122) und zweiten Schneidstege (132) gleich große Drallwinkel aufweisen.

8. Schaftfräser (10) nach einem der vorhergehenden Ansprüche, **dadurch gekennzeichnet, dass** die Zahl der ersten Schneidstege (122) gleich der Zahl der zweiten Schneidstege (132) ist.

9. Schaftfräser (10) nach einem der vorhergehenden Ansprüche, **gekennzeichnet durch** eine geradzahlige Vielzahl, insbesondere vier, erster Schneidstege (122) und eine geradzahlige Anzahl, insbesondere vier, zweiter Schneidstege (132).

10. Schaftfräser (10) nach einem der vorhergehenden Ansprüche, **dadurch gekennzeichnet, dass** der vordere Längenbereich (121) kürzer ist als der hintere Längenbereich (131).

11. Schaftfräser (10) nach einem der vorhergehenden Ansprüche, **dadurch gekennzeichnet, dass** die Länge des vorderen Längenbereichs (121) das 0,1- bis 3-fache, vorzugsweise das 0,1- bis 0,2-fache, der Länge des Schneidteils (100) beträgt.

12. Schaftfräser (10) nach einem der vorhergehenden Ansprüche, **dadurch gekennzeichnet, dass** der Schneidteil (100) stirnschneidend ausgebildet ist.

13. Verfahren zur Schleifbearbeitung eines Schneidteils (100) eines Schaftfräsers (10) nach einem der Ansprüche 1 bis 12, **dadurch gekennzeichnet, dass**
zur Ausbildung erster und zweiter Umfangsschneiden (1221, 1321) zunächst erste Nuten (1222) und zweite Nuten (1322) jeweils mit Hilfe einer ersten Schleifscheibe, die ein dem Nutquerschnitt der ersten Nuten (1222) und zweiten Nuten (1322) entsprechendes Schleifscheibenprofil hat und über die Länge der entsprechenden Nut in einem Zug über den Schneidteil (100) geführt wird, mit einem Drall um eine Drehachse des Schaftfräsers (10) sequentiell in den Schneidteil (100) geschliffen werden, und
zur Ausbildung dritter und vierter Umfangsschneiden (1223, 1323) anschließend dritte Nuten (1224) und vierte Nuten (1324) jeweils mit Hilfe einer zweiten Schleifscheibe, die ein dem Nutquerschnitt der dritten Nuten (1224) und vierten Nuten (1324) entsprechendes Schleifscheibenprofil hat und über die Länge der entsprechenden Nut in einem Zug über den Schneidteil (100) geführt wird, mit einem Drall um die Drehachse des Schaftfräsers (10) sequentiell in den Schneidteil (100) geschliffen werden.

## Claims

1. An end mill (10) for milling composite materials, having a defined rotational direction, a shaft (200) and a cutting part (100), wherein the cutting part (100) extends from a shaft-side end (130) to a front-side end (120) and comprises, in a front length region (121) adjacent to the front-side end (120) of the cutting part (100), a plurality of first cutting bars (122) with first circumference cutters (1221) extending at a positive angle of twist, which are each adjacent to a first groove (1222) extending at a positive angle of twist (α1), and comprises, in a rear length region (131) adjacent to the shaft-side end (130) of the cutting part (100), a plurality of second cutting bars (132) extending at a negative angle of twist (α2) with second circumference cutters (1321), which are each adjacent to a second groove (1322) extending at a negative angle of twist (α2), wherein
each first cutting bar (122) has at least one third circumference cutter (1223) downstream of the first circumference cutter (1221) and adjacent to a third groove (1224) which has a smaller groove cross-section than the first groove (1222), and each second cutting bar (132) has at least one fourth circumference cutter (1323) downstream of the second circumference cutter (1321) and adjacent to a fourth groove (1324) which has a smaller groove cross-section than the second groove (1322), **characterized in that**
the first cutting bars (122) comprise chip divider grooves which divide at least a part of the first circumference cutters (1221) and third circumference cutters (1223) into cutter segments, and the second cutting bars (132) comprise chip divider grooves which divide at least a part of the second circumference cutters (1321) and fourth circumference cutters (1323) into cutter segments, wherein
every second first groove (1222) extends into the rear length region (131) as far as the shaft-side end (130) of the cutting part (100) when viewed in the circumferential direction of the end mill (10) and divides the second and fourth circumference cutters (1321, 1323) into cutter segments, and
every second second groove extends into the front length region (121) as far as the front-side end (120) of the cutting part (100) when viewed in the circumferential direction of the end mill (10) and divides the first and third circumference cutters (1221, 1223) into cutter segments.

2. The end mill (10) according to claim 1, **characterized in that** every third circumference cutter (1223) runs parallel to the upstream first circumference cutter (1221) and every fourth circumference cutter (1323) runs parallel to the upstream second circumference cutter (1321).

3. The end mill (10) according to claim 1 or 2, **characterized in that** the number of third circumference cutters (1223) is equal to the number of fourth circumference cutters (1323).

4. The end mill (10) according to claim 3, **characterized in that** two third circumference cutters (1223) are arranged downstream of each first circumference cutter (1221) and two fourth circumference cutters (1323) are arranged downstream of each second circumference cutter (1321).

5. The end mill (10) according to one of the preceding claims, **characterized in that** all circumference cutters lie on the same radius.

6. The end mill (10) according to one of the preceding claims, **characterized in that** the first cutting bars (122) and second cutting bars (132) are each distributed equidistantly.

7. The end mill (10) according to one of the preceding claims, **characterized in that** the first cutting bars (122) and second cutting bars (132) have the same angle of twist size.

8. The end mill (10) according to one of the preceding claims, **characterized in that** the number of first cutting bars (122) is equal to the number of second cutting bars (132).

9. The end mill (10) according to one of the preceding claims, **characterized by** an even numbered plurality, in particular four, of first cutting bars (122) and an even number, in particular four, of second cutting bars (132).

10. The end mill (10) according to one of the preceding claims, **characterized in that** the front length region (121) is shorter than the rear length region (131).

11. The end mill (10) according to one of the preceding claims, **characterized in that** the length of the front length region (121) is 0.1 to 3 times, preferably 0.1 to 0.2 times, the length of the cutting part (100).

12. The end mill (10) according to one of the preceding claims, **characterized in that** the cutting part (100) is configured to be end-cutting.

13. A method for grinding a cutting part (100) of an end mill (10) according to one of claims 1 to 12, **characterized in that**
for forming first and second circumference cutters (1221, 1321), first grooves (1222) and second grooves (1322) are initially ground sequentially into the cutting part (100) with a twist about an axis of rotation of the end mill (10) with the aid of a first grinding wheel, which has a grinding wheel profile corresponding to the groove cross-section of the first grooves (1222) and second grooves (1322) and is guided over the cutting part (100) in one pass over the length of the corresponding groove, and
for forming third and fourth circumference cutters (1223, 1323), third grooves (1224) and fourth grooves (1324) are subsequently ground sequentially into the cutting part (100) with a twist about the axis of rotation of the end mill (10) with the aid of a second grinding wheel, which has a grinding wheel profile corresponding to the groove cross-section of the third grooves (1224) and fourth grooves (1324) and is guided over the cutting part (100) in one pass over the length of the corresponding groove.

## Revendications

1. Fraise à queue (10) pour le fraisage de matériaux composites, avec un sens de rotation défini, une queue (200) et une partie de coupe (100), dans laquelle la partie de coupe (100) s'étend d'une extrémité côté queue (130) jusqu'à une extrémité côté frontal (120) et présente, dans une zone de longueur avant (121) adjacente à l'extrémité côté frontal (120) de la partie de coupe (100), une pluralité de premières nervures de coupe (122) s'étendant avec un angle de torsion positif avec de premiers tranchants périphériques (1221), qui sont respectivement adjacents à une première rainure (1222) s'étendant avec un angle de torsion positif (a1), et dans une zone de longueur arrière (131) adjacente à l'extrémité côté queue (130) de la partie de coupe (100), une pluralité de deuxièmes nervures de coupe (132) s'étendant avec un angle de torsion négatif (α2) avec de deuxièmes tranchants périphériques (1321) qui sont respectivement adjacents à une deuxième rainure (1322) s'étendant avec un angle de torsion négatif (α2), dans laquelle
chaque première nervure de coupe (122) présente au moins un troisième tranchant périphérique (1223) en aval du premier tranchant périphérique (1221) et adjacent à une troisième rainure (1224) qui présente une section de rainure plus petite que la première rainure (1222), et chaque deuxième nervure de coupe (132) présente au moins un quatrième tranchant périphérique (1323) en aval du deuxième tranchant périphérique (1321) qui est adjacent à une quatrième rainure (1324) qui présente une section de rainure plus petite que la deuxième rainure (1322), **caractérisée en ce que**
les premières nervures de coupe (122) présentent des rainures de brise-copeaux qui divisent au moins une partie des premiers tranchants périphériques (1221) et des troisièmes tranchants périphériques (1223) en segments de coupe, et les deuxièmes nervures de coupe (132) présentent des rainures de brise-copeaux qui divisent au moins une partie des deuxièmes tranchants périphériques (1321) et des quatrièmes tranchants périphériques (1323) en segments de coupe, dans laquelle
dans la direction circonférentielle de la fraise à queue (10), chaque deuxième première rainure (1222) s'étend dans la zone de longueur arrière (131) jusqu'à l'extrémité côté queue (130) de la partie de coupe (100) et divise les deuxièmes et quatrièmes tranchants périphériques (1321, 1323) en segments de coupe, et
dans la direction circonférentielle de la fraise à queue (10), chaque deuxième deuxième rainure s'étend dans la zone de longueur avant (121) jusqu'à l'extrémité côté frontal (120) de la partie de coupe (100) et divise les premiers et troisièmes tranchants périphériques (1221, 1223) en segments de coupe.

2. Fraise à queue (10) selon la revendication 1, **caractérisée en ce que** chaque troisième tranchant périphérique (1223) est parallèle au premier tranchant périphérique (1221) en amont et chaque quatrième tranchant périphérique (1323) est parallèle au deuxième tranchant périphérique (1321) en amont.

3. Fraise à queue (10) selon la revendication 1 ou 2, **caractérisée en ce que** le nombre de troisièmes tranchants périphériques (1223) est égal au nombre de quatrièmes tranchants périphériques (1323).

4. Fraise à queue (10) selon la revendication 3, **caractérisée en ce que** chaque premier tranchant périphérique (1221) présente en aval deux troisièmes tranchants périphériques (1223) et chaque deuxième tranchant périphérique (1321) présente en aval deux quatrièmes tranchants périphériques (1323).

5. Fraise à queue (10) selon l'une quelconque des revendications précédentes, **caractérisée en ce que** tous les tranchants périphériques se situent sur un même rayon.

6. Fraise à queue (10) selon l'une quelconque des revendications précédentes, **caractérisée en ce que** les premières nervures de coupe (122) et les deuxièmes nervures de coupe (132) sont respectivement réparties de manière équidistante.

7. Fraise à queue (10) selon l'une quelconque des revendications précédentes, **caractérisée en ce que** les premières nervures de coupe (122) et les deuxièmes nervures de coupe (132) présentent des angles de torsion de même taille.

8. Fraise à queue (10) selon l'une quelconque des revendications précédentes, **caractérisée en ce que** le nombre de premières nervures de coupe (122) est égal au nombre de deuxièmes nervures de coupe (132).

9. Fraise à queue (10) selon l'une quelconque des revendications précédentes, **caractérisée par** une pluralité à nombre pair, en particulier quatre, de premières nervures de coupe (122) et un nombre pair, en particulier quatre, de deuxièmes nervures de coupe (132).

10. Fraise à queue (10) selon l'une quelconque des revendications précédentes, **caractérisée en ce que** la zone de longueur avant (121) est plus courte que la zone de longueur arrière (131).

11. Fraise à queue (10) selon l'une quelconque des revendications précédentes, **caractérisée en ce que** la longueur de la zone de longueur avant (121) est de 0,1 à 3 fois, de préférence de 0,1 à 0,2 fois, la longueur de la partie de coupe (100).

12. Fraise à queue (10) selon l'une quelconque des revendications précédentes, **caractérisée en ce que** la partie de coupe (100) est à coupe frontale.

13. Procédé de ponçage d'une partie de coupe (100) d'une fraise à queue (10) selon l'une quelconque des revendications 1 à 12, **caractérisé en ce que**
pour former de premiers et deuxièmes tranchants périphériques (1221, 1321), des premières rainures (1222) et des deuxièmes rainures (1322) sont d'abord poncées dans la partie de coupe (100) de manière séquentielle avec une torsion autour d'un axe de rotation de la fraise à queue (10), respectivement à l'aide d'une première meule d'ébarbage qui présente un profil de meule d'ébarbage correspondant à la section transversale de rainure des premières rainures (1222) et des deuxièmes rainures (1322) et qui est guidée sur la partie de coupe (100) sur la longueur de la rainure correspondante en un seul trait, et
pour former de troisièmes et quatrièmes tranchants périphériques (1223, 1323), des troisièmes rainures (1224) et des quatrièmes rainures (1324) sont ensuite poncées dans la partie de coupe (100) de manière séquentielle avec une torsion autour de l'axe de rotation de la fraise à queue (10), respectivement à l'aide d'une deuxième meule d'ébarbage qui présente un profil de meule d'ébarbage correspondant à la section transversale de rainure des troisièmes rainures (1224) et des quatrièmes rainures (1324) et qui est guidée sur la partie de coupe (100) sur la longueur de la rainure correspondante en un seul trait.
